# EUROPEAN PATENT SPECIFICATION

(11) **EP 0 472 489 B1**
(45) Date of publication and mention of the grant of the patent: **20.12.1995**
(21) Application number: 91610060.5
(22) Date of filing: 01.08.1991
(51) Int. Cl.: H02B 1/28

(54) **An apparatus or indicator cabinet of watertight design**
Wasserdichtes Gehäuse oder Anzeigegerät
Un appareil ou un boîtier de signalisation de conception étanche

(30) Priority: 02.08.1990 DK 1853/90
(43) Date of publication of application: 26.02.1992
(73) Proprietor: SCANVAEGT A/S, DK-8200 Aarhus N (DK)
(72) Inventor: Jensen, Hugo, DK-8220 Brabrand (DK); Grundtvig, Lars, DK-8220 Brabrand (DK)
(74) Representative: Skoett-Jensen, Knud

(56) References cited:
- DE-A- 1 803 487
- DE-U- 8 912 397
- GB-A- 2 209 893
- US-A- 2 737 203
- US-A- 4 424 407

## Description

The present invention relates to an apparatus or indicator cabinet having an openable front plate member and a wire connection or wire lead-in at another of the sides of the cabinet, preferably the rear side.

The invention primarily aims at an indicator cabinet in connection with a weighing system, whereby the cabinet or box front side is a metal plate that is premounted with different components such as indicator lamps and actuation buttons, while also inside the cabinet there will normally be mounted various components. The interior of such a cabinet can be accessible by unscrewing the front plate or by this plate being arranged as a pivot cover.

The invention in particular concerns such apparatus or indicator cabinets that are adapted for use in the food industry and especially such cabinets which contain sensitive electronic equipment. This involves very high requirements to the cabinets in the following three main respects:
1) The cabinets should be made so that they are easy to clean in an effective manner, i.e. they should be without impurity collecting details that cannot easily be cleaned by simple flushing and, when necessary, brushing;
2) The cabinets should be highly watertight, such that they can resist flushing without water entering the cabinet;
3) The cabinets should provide effective electrical screening of their interior in order to prevent external noise fields from reaching the components therein.

All this, of course, should be combined with a good mechanical strength, good sealing of any wire lead-in and other more basal conditions.

It seems to be a fact that no cabinets of the prior art can particularly well satisfy all these conditions in combination. Thus, cabinets with openable or unscrewable covers over access openings, including also the said front plates, are difficult to clean, because due to the required watertightness they must have packings or sealing rings under the covers, and along these packings impurities or biological material may be deposited so as to be difficult to remove by the cleanings that are made daily or even more times each day. For an effective cleaning it is necessary to flush specifically and directly into the relevant joints, and along the packings there will occur grooves with sharp bottoms that are difficult to clean even with the use of a brush.

By the invention it is primarily endavoured to provide a cabinet, which is totally sealed against intrusion of water by flushing cleaning, and which is accessible through a removable panel member, preferably the said front plate, without this for the sake of the required tightness demanding any tightening inwardly against the outside of the wall opening, at which it is mounted, such that impurity absorbing and difficult cleanable groove formations along the packings can be avoided.

The invention is based on the basic idea that with the use of an already known joining technique it is possible in a releasable manner to secure the cover portion, e.g. the entire front plate portion, in plane with the opening which is intended to be covered by the cover means, viz. with the use of sealing strips which are mounted with radial sealing between the circumference of the cover and the surrounding edge of the hole to be covered thereby. Such a technique is known e.g. from the mounting of windows in boats and camping cars, though in these connections the aim is not a totally sealed encapsulation and not either a fastening, which is particularly well suited to be effectively cleaned by frequent cleanings.

It is known to use this mounting technique for the mounting of window panes in openable cover lids over front plates in indicator cabinets, but nonetheless there has still been problems with respect to the cleaning of the lid sealing. With the invention it is the metal front plate itself that is mounted in the said manner, without the cabinet otherwise having any conventionally openable plate portion. The invention is based on the consideration that the cabinet will not have to be opened very often and that it is acceptable, therefore, to use the discussed mounting as an access closure; the closure is reasonably easy to open, as all what is required is to pull out a flexible, roundgoing filler cleat which from the front side has been inserted between the sealing strip portions sealing against the edges of the mounting plate and the mounting opening, respectively, while the closing can be somewhat more difficult, yet practicable with the use of suitable aiding tools.

The sealing can and should be arranged in a manner so as to be totally watertight, this also implying that it is airtight. As also the remainder of the cabinet can easily be made in a water- and airtight manner problems may arise with respect to the formation of considerable over- and underpressures in the cabinet when temperature changes occur; in practice such changes may be rather pronounced. On this background the invention also provides for a particular venting system which in a simple manner will permit a pressure equalization between the cabinet and its surroundings, without any particular risk of water entering the cabinet when it is subjected to flushing.

Certain singular connections to the cabinet can be established through a sealed lead-in, but normally it will be desirable that it is also possible to connect a removable multiplug for external data connection. Through such a connection, however, electrical noise signals may undesirably intrude into the cabinet, and it is customary, therefore, that immediately behind a connector jack on the cabinet, i.e. inside the cabinet, there is arranged electronic filter means for filtering out such signals. According to the invention, however, it is preferred to arrange these filter means outside the cabinet, such that the noise signals will not even get into the cabinet. The outer filter means may be mounted under an unscrewable outer cover having at its exposed sides only a narrow throughlet hole for the cable connection to the multiplug.

With the use of a flexible sealing strip for the mounting of the metallic front plate the strip area between the front plate edge and the surrounding edge of the mounting hole in the fixed front side portion of the cabinet, the use of conventional sealing strip materials will imply the possibility of electrical noise fields intruding from outside, even though the gap between the adjacent plate edges is rather narrow. In order to avoid this the invention provides for the novel feature of using af sealing strip made from an electrically conductive material, whereby this material will form a screening bridge between the front plate and the associated edge of the mounting opening in the front side of the cabinet, whereby the screening may be complete.

In the following the invention is described in more detail with reference to the drawing, in which:
Fig. 1 is a perspective view of an indicator cabinet according to the invention,
Fig. 2 is as cross sectional view of a part thereof,
Fig. 3 is a perspective view of the cabinet seen from the rear,
Fig. 4 is a lateral sectional view of a connector unit at the rear of the cabinet, and
Fig. 5 is a schematic view of a lower part of the cabinet.

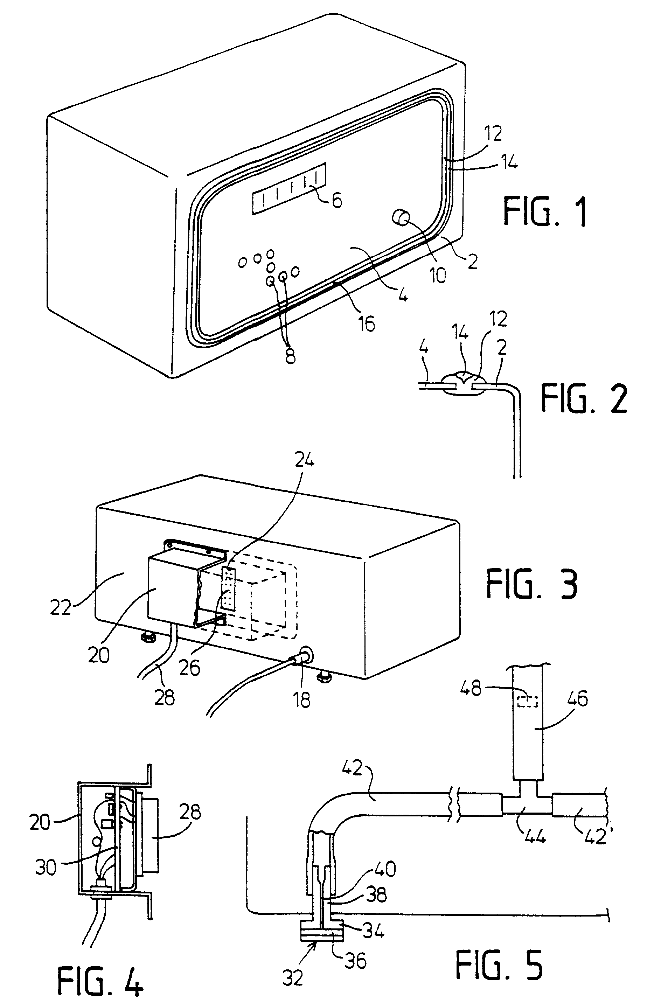

The apparatus or indicator cabinet shown in Fig. 1 is made of stainless steel plate and is fully welded in such a manner that all corner and edge joints are fully sealed. In the front side 2 of the cabinet a large opening is cut out, the edges of which extend in parallel with the front side edges slightly spaced therefrom, and with curved corner portions as shown. In this opening is mounted a front plate 4, which is a metal plate carrying different components such as a display unit 6, indicator lamps 8 and one or more actuator buttons 10.

The front plate 4 is inserted and mounted in the opening of the front side 2 substantially flush with the cabinet front side 2 by means of a mounting technique which is well known from the mounting of window panes in boats and camping cars, viz. by means of a rubber strip 12 which is profiled for tight reception of the interfacing edges of the front side 2 and the 'pane' 4, which is only here a metal plate that acts to screen against intrusion of exterior electrical noise signals. As also shown in Fig. 2 the strip 12 is mounted by first being brought into loose engagement with the adjacent edge portions, whereafter a filler cleat 14 is pressed into a forwardly open groove in the strip 12. It is possible hereby to obtain a joint which is entirely liquid and air tight as well as mechanically stable, yet also reasonably easy to open when at rare occassions it is desirable to obtain access to the interior of the cabinet, as for the opening it is sufficient to pull out the filler cleat 14, whereafter the plate member 4 is easy to take out.

From the outside these joined strips 12,14 will be easy to keep clean, because the joint can be made such that it will not easily collect impurities, and it can be cleaned by simple flushing from the front side of the cabinet.

In known applications of the joining and sealing strip 12,14 the aim is a permanent joint, though with the possibility of an exchange from time to time, while in connection with the invention the aim is an openable joint replacing a lid- or doorlike mounting of the front plate 4, the cabinet having no other access means for reaching the interior of the cabinet. Because the cabinet should be absolutely watertight it is preferred to shape the strip 12 as a true ring body having a perimeter adapted to the specific purpose, this in practice being achievable by vulcanizing together the ends of an extruded strip length. The filler cleat 14 will not have to be correspondingly unbroken, when only care is taken that by its mounting its opposite ends will be brought closely together as shown at 16, such that no dirt collecting space will occur between its ends.

Another important circumstance is that with this mounting method there is created a gap between the joined edges of the metal plate parts 2 and 4, as most clearly seen in Fig. 2. This gap is disadvantageous, because it conditions an intrusion of electrical noise fields from outside; however, according to the invention this problem is solved by virtue of the rubber strip material itself being made of electrically conductive material.

The cabinet may of course well have entirely watertight cable lead-in means, such as shown at 18 in Fig. 3, but normally it will be desirable that cable connections can be effected by means of one or more removable multiplugs. Such plugs are available also in watertight designs, but then they are very expensive, and as an advantageous alternative the invention provides for the use of non-watertight multiplugs mounted in the interior of a removable screening housing, as shown or indicated at 20 in Fig. 3. In the rear side, 22, of the cabinet there is provided but the smallest required opening 24 for getting access to an interior multijack 26, and a corresponding plug 28, Fig. 4, is rigidly mounted in the screening housing 20 for ascertaining a correct plug connection by the mounting of this housing, e.g. by means of nuts screwed onto protruding bolt pins welded to the rear cabinet side 22. The lead-in of one or more cables 29 to the housing 20 may be effected through sealed screwed connections.

In connection with weighing systems, for example, it is very important that the supplied processed data signals be free of electrical noise, this normally being obtained by means of special filters mounted inside the cabinet. By the invention it is realized that this may be an unsafe solution, as after all the noise signals are actually brought into the cabinet. According to the invention an improved alternative is to mount the filter means - shown in Fig. 4 as printcards 30 with associated components - in the screening housing 20 outside the connector plug 28, such that it will be the 'noise cleaned' signals that will be supplied to this plug. With the use of the relatively small opening 24 in the rear side of the cabinet and of the associated screening housing 22 it can then be expected - and also be measured - that noticeably noise polluted signals are not supplied to the interior of the cabinet.

It has been mentioned that the cabninet should meet high requirements as to watertightness and that the cabinet may well be subjected to frequent flushing by water, this normally meaning cold water. During the operation a certain heat will be generated inside the cabinet, and generally quite large temperature fluctuations should be aforeseen. For this reason, it is in practice hardly possible to rely on a hermetical sealing of the cabinet, because the associated pressure changes inside the cabinet would then require an unrealistic expensive construction thereof. Therefore, a venting possibility should be provided in such a manner that the interior air pressure can be equalized with the ambient pressure, without water being able to intrude into the cabinet through the required venting opening, e.g. when this is being flushed with cold water.

A pressure equilization system suitable for this purpose is shown in Fig. 5. In the bottom of the cabinet there is mounted in a sealed manner a bolt 32 having an outer bolt head 34, in which there is provided a cross bore 36, and a shaft portion 38 having a narrow axial bore 40 corresponding with the cross bore 36 and being upwardly open. The upper end of the shaft 38 is connected with a hose 42, which extends upwardly and then horizontally along the cabinet bottom to a T-piece 44, from which a branched off conduit 46 projects upwardly, while the hose 42 continues in a hose length 42′ to another, corresponding bolt or foot member at the opposite end of the cabinet. The vertical conduit 46, in a manner not shown, extendes upwardly practically to the ceiling of the cabinet, where it has an open end, and preferably there is inside this conduit provided a plug 48 of a porous material, which will permit penetration of air, but not of any impact of water.

As mentioned the situation may arise that a relatively warm cabinet is subjected to a flushing with cold water, whereby the air in the cabinet will contract so as to suck in air through the described conduit system, that is from the upper end of the vertical conduit 46 and in through the lower cross bore 36. Just because the cabinet is simultaneously sprayed with water a result could well be a suction in of water through the bore 36, but it will be appreciated that this bore should be subjected to water through quite some time before a water intrusion will reveal itself at the upper end of the vertical conduit 46. Brief, direct impacts of flushing water against an end of the bore 36 might cause a water pressure wave up through the system, but the porous plug 48 will prevent a free propagation of such a wave up to the end of the rising conduit 46.

When as mentioned two venting bolts 32 are mounted essentially spaced from each other the reason for this is that in connection with flushing it will only rarely happen that a flushing beam will hit both bolts at the same time; if only one of the projecting head members 32 is held free of water the intake of air will take place predominantly through just that head, whereby the intake of water through the other head is kept at a minimum because of the associated much higher flowing resistance.

It is to be noted that the rear screen housing 20 owing to its relatively small size can be fastened effectively and in a fully watertight manner with the use of a simple, flat sealing ring, the outer edge of which is easy to clean and not very liable to collect impurities.

The use of the disclosed mounting system for the front plate 4 exhibits the additional advantage that the mounting strip 12 is fixedly and sealingly lapping over the edge of the front plate, whereby it will also cover the outer edge of a cover sheet on the front plate; when graphical indications have to be present on the front plate it is highly preferable that such indications be printed on a sheet or film that is secured to the front plate, and an associated problem can be that under various influences the sheet can start getting loose at the corners and the edges, this here being counteracted.

Inside the cabinet may be provided a small heating body, if the installed components will not develop heat suitably for maintaining in the cabinet a temperature just slightly above ambient temperature. Hereby any water that might have intruded can be expelled, when a venting possibility exists. The invention, of course, will also comprise cabinets having no such venting means, that is absolutely watertight cabinets, which will still be of a simple and cheap design and yet have reasonably easily operable access means.

## Claims

1. A flush proof, apparatus or indicator cabinet having a component carrying metallic wall portion (4) forming an openable, tightly sealing closure of an access opening in the metallic cabinet, characterized in that the component carrying wall portion (4) is mounted in an opening in a wall plate portion (2) of the cabinet, substantially in plane therewith, and is secured in a sealed manner to the edge of the opening by a joint of the type comprising a roundgoing holding and sealing strip (12,14) having a body portion and wing portions projecting to opposite sides thereof, the wing portions being provided with outwardly open grooves for receiving the edges to be joined, while the body portion has a groove operable to receive from the outside of the joint a filler cleat (14) for sealingly clamping the sealing strip (12) between the joined plate edges.

2. A cabinet according to claim 1, in which the sealing strip (12) is shaped as a continuous annular member.

3. A cabinet according to claim 1, in which the sealing strip (12) is made of electrically conducting material.

4. A cabinet according to claim 1, in which there is provided, at the lower end of the cabinet, one or more narrow venting holes (36), which are connected to a rising conduit (40) inside the cabinet.

5. A cabinet according to claim 1, in which one or more lower venting holes are provided as bores in respective bolts (38), viz. as horizontal throughbores (36) in protruding bolt heads (34) and in connection with axial bores (40) branched off only upwardly.

6. A cabinet according to claim 1, having one or more electrical connector jacks mounted in a lead-in opening in a rigid wall portion (22) of the cabinet, characterized in that adjacent this opening there is mounted a connector jack (24) of the non-watertight type, and that at the wall portion (22) and over the opening there is secured by screws a metallic cup member (20) having watertight wire throughlet means and is rigidly provided with a corresponding connector plug (28).

7. A cabinet according to claim 6, in which the cup member (20), at the outside of its connector plug (28), is provided with electrical means (30) of the type adapted for filtering out exterior noise signals from the relevant wire connections.

## Patentansprüche

1. Eine abspritzdichte Vorrichtung oder Anzeigegehäuse, mit einem Bauteile tragenden metallischen Wandabschnitt (4), der einen öffnungsfähigen, dicht verschließenden Verschluß einer Zugangsöffnung in dem metallischen Gehäuse bildet, dadurch gekennzeichnet, daß der Bauteile tragende Wandabschnitt (4) in einer Öffnung in einem Wandplattenabschnitt (2) des Gehäuses angebracht ist, und zwar im wesentlichen in einer Ebene damit, und in einer dichtenden Weise an dem Rand der Öffnung über eine Verbindung befestigt ist, die von der Art ist, die einen umlaufenden Halte- und Dichtungsstreifen (12, 14) mit einem Körperabschnitt und Flügelabschnitten umfaßt, die sich zu entgegengesetzten Seiten davon erstrecken, wobei die Flügelabschnitte mit nach außen offenen Rillen zum Aufnehmen der zu verbindenden Ränder versehen sind, während der Körperabschnitt eine Rille aufweist, die zum Aufnehmen einer Fülleiste (14) von der Außenseite der Verbindung zum abdichtenden Klemmen des Dichtungsstreifens (12) zwischen den verbundenen Plattenrändern bestimmt ist.

2. Ein Gehäuse nach Anspruch 1, bei dem der Dichtungsstreifen (12) als kontinuierliches ringförmiges Element ausgebildet ist.

3. Ein Gehäuse nach Anspruch 1, bei dem der Dichtungsstreifen (12) aus elektrisch leitendem Material besteht.

4. Ein Gehäuse nach Anspruch 1, bei dem am unteren Ende des Gehäuses ein oder mehrere schmale Belüftungslöcher (36) vorgesehen sind, die mit einem steigenden Kanal (40) in dem Gehäuse verbunden sind.

5. Ein Gehäuse nach Anspruch 1, bei dem ein oder mehrere Belüftungslöcher als Bohrung in entsprechenden Bolzen (38) vorgesehen sind, nämlich als horizontale Durchgangsbohrungen (36) in vorstehenden Bolzenköpfen (34) und in Verbindung mit axialen Bohrungen (40), die nur nach oben abgezweigt sind.

6. Ein Gehäuse nach Anspruch 1, das eine oder mehrere elektrische Verbindungsbuchsen (24) aufweist, die in einer Einlaßöffnung in einem starren Wandabschnitt (22) des Gehäuses angebracht sind, dadurch gekennzeichnet, daß benachbart zu dieser Öffnung eine Verbindungsbuchse (24) der nichtwasserdichten Art angebracht ist und daß am Wandabschnitt (22) und über der Öffnung mittels Schrauben ein metallisches Becherelement (20) befestigt ist, das wasserdichte Kabel-Durchlaßmittel aufweist und starr mit einem korrespondierenden Verbindungsstecker (28) versehen ist.

7. Ein Gehäuse nach Anspruch 6, bei dem das Becherelement (20) an der Außenseite seines Verbindungssteckers (28) mit elektrischen Mitteln (30) des Typs versehen ist, der zum Herausfiltern äußerer Geräuschsignale der relevanten Kabelverbindungen geeignet ist.

## Revendications

1. Boîtier indicateur ou appareil étanche, comportant une partie de paroi métallique (4) portant des composants, formant une fermeture étanche, pouvant être ouverte, d'une ouverture d'accès du boîtier métallique,
caractérisé en ce que la partie de paroi (4) portant des composants est montée dans une ouverture dans une partie de plaque de paroi (2) du boîtier, sensiblement dans le même plan que celle-ci, et est fixée d'une façon étanche au bord de l'ouverture par un joint du type comprenant une bande d'étanchéité et de maintien périphérique (12,14) présentant une partie de corps et des parties d'aile faisant saillie aux côtés opposés de celle-ci, les parties d'aile étant munies de rainures ouvertes vers l'extérieur pour recevoir les bords à joindre, tandis que la partie de corps présente une rainure susceptible de recevoir de l'extérieur du joint un taquet de remplissage (14) pour serrer de façon étanche la bande d'étanchéité (12) entre les bords joints de la plaque.

2. Boîtier selon la revendication 1, dans lequel la bande d'étanchéité (12) est conformée comme un organe annulaire continu.

3. Boîtier selon la revendication 1, dans lequel la bande d'étanchéité (12) est constituée d'une matière électriquement conductrice.

4. Boîtier selon la revendication 1, dans lequel il est prévu, à l'extrémité inférieure du boîtier, un ou plusieurs trous de ventilation étroits (36), qui sont reliés à un conduit montant (40) à l'intérieur du boîtier.

5. Boîtier selon la revendication 1, dans lequel un ou plusieurs trous de ventilation inférieurs sont prévus sous forme de perçages dans des boulons respectifs (38), c'est-à-dire comme perçages traversants horizontaux (36) dans des têtes (34) de boulon en saillie et en liaison avec des perçages axiaux (40) branchés seulement vers le haut.

6. Boîtier selon la revendication 1, présentant une ou plusieurs fiches de liaison électriques montées dans une ouverture d'entrée dans une partie de paroi rigide (22) du boîtier,
caractérisé en ce que, de façon adjacente à cette ouverture, il est monté une fiche de liaison (24) du type non étanche à l'eau, et en ce que, sur la partie de paroi (22) et sur l'ouverture, il est fixé, par des vis, un organe métallique (20) en forme de cuvette, présentant des moyens de passage de fils étanches à l'eau et muni rigidement d'une fiche de liaison correspondante (28).

7. Boîtier selon la revendication 6, dans lequel l'organe (20) en forme de cuvette, à l'extérieur de sa fiche de liaison (28), est muni de moyens électriques (30) du type adapté pour filtrer des signaux parasites extérieurs des liaisons de fil concernées.
